# EUROPÄISCHE PATENTSCHRIFT

(11) **EP 0 554 705 B1**
(45) Veröffentlichungstag und Bekanntmachung des Hinweises auf die Patenterteilung: **10.09.1997**
(21) Anmeldenummer: 93100707.4
(22) Anmeldetag: 19.01.1993
(51) Int. Cl.: C04B 16/08

(54) **Leichtzuschlagstoff mit gehärteter Oberfläche für Putze, Betone, mineralisch oder kunststoffgebundene Dämmplatten sowie Dämmstoffmaterial für Schüttungen**
Light weight additives with hardened surface for plaster, concrete and isolating panels fixed by mineral or plastic and isolating material for spouted beds
Additif léger avec une surface durcie pour des plâtres, des bétons, des plaques isolantes liés par des liaisons minérales ou plastiques et minéral isolant pour des remblais

(30) Priorität: 29.01.1992 DE 4202431
(43) Veröffentlichungstag der Anmeldung: 11.08.1993
(73) Patentinhaber: Heidelberger Zement AG, D-69120 Heidelberg (DE)
(72) Erfinder: Wolf, Axel, Dipl.-Ing., W-6940 Weinheim (DE); Buchert, Hans, W-6520 Worms 26 (DE); Kopp, Ulrich, Dipl.-Ing., W-6909 Walldorf (DE)
(74) Vertreter: Schmid, Rudolf, Dipl.-Ing., Patentanwalt

(56) Entgegenhaltungen:
- EP-A- 0 410 662
- AT-B- 391 862
- CHEMICAL ABSTRACTS, vol. 112, no. 14, 2. April 1990, Columbus, Ohio, US; abstract no. 124171g, Seite 340; & JP-A-01208350

## Beschreibung

Die Erfindung betrifft ein Verfahren zur Herstellung von Leichtzuschlagstoffen mit gehärteter Oberfläche auf der Grundlage von Polystyrolschaumstoff für Putze, Betone, mineralisch oder kunststoffgebundene Dämmplatten sowie Dämmstoffmaterial für Schüttungen, wobei das Polystyrol in erster Stufe zerkleinert wird, sowie einen mit diesem Verfahren hergestellten Leichtzuschlagstoff.

Der erfindungsgemäße Leichtzuschlagstoff mit gehärteter Oberfläche ist ein Zuschlagstoff mit höherer Eigenfestigkeit und geringerer Elastizität aus expandiertem Polystyrol, das nachbehandelt wurde. Der erfindungsgemäße Leichtzuschlagstoff eignet sich insbesondere als Zuschlagstoff für Innenputze auf Gipsbasis und für Außenputze auf Kalk-Zementbasis. Diese beiden Putz-Kategorien werden dann als Leichtputze bezeichnet und haben eine hohe Ergiebigkeit. Ferner eignet sich der erfindungsgemäße Leichtzuschlagstoff für Dämmputze auf mineralischer Basis oder Bindemittel auf Kunststoffbasis, für Schlitzmörtel, für Akkustik-Putze, für Leichtmauermörtel und für Leichtbeton.

Der erfindungsgemäße Leichtzuschlagstoff eignet sich ferner für mineralisch oder kunststoffgebundene Dämmplatten, insbesondere für solche auf Gipsbasis oder Zementbasis.

Ferner stellt der erfindungsgemäße Leichtzuschlagstoff ein Dämmstoff für Schüttungen, insbesondere im Dachbereich und zur Schrägen-Verfüllung als Dämmstoff-Körnung für Kerndämmung im Mauerwerk und für sonstige Verfüllungen dar, beispielsweise als Höhenausgleich im Fußbodenbereich; weitere Dämmstoffanwendungen sind die Wärmedämmung und die Trittschalldämmung sowie die Anwendung auf dem Gebiet der Dämm-Estriche.

Expandiertes Polystyrol, das beispielsweise aus runden, glatten, geschlossenporigen Polystyrol-Kügelchen besteht, ist als Leichtzuschlagstoff für Putze, insbesondere für Grundputze dem Stand der Technik bekannt.

Ferner ist expandiertes Polystyrol als Zuschlagstoff für Betone bekannt.

Aus der AT-B-391 862 ist ein Leichtzuschlagstoff auf der Grundlage von Polystyrolschaumstoffteilen bekannt. Für die Verwendung als Leichtzuschlagstoff werden die Polystyrolschaumstoffteile mit Hilfe einer Mühle zu Polystyrolschaumstoffpartikeln mit zerklüfleter Oberfläche zerkleinert. Diese zerkleinerten Polystyrolschaumstoffpartikel werden einer Wärmebehandlung unterworfen, bis ihre Oberflächen schmelzen und sich die Partikel verkleinern und verfestigen, d.h. verdichten. Die Wärmebehandlung erfogt mittels eines Heizstrahlers, d.h. mit trockenen Hitzestrahlen.

Vorliegender Erfindung liegt nun die Aufgabe zugrunde, ein Verfahren zur Herstellung von Leichtzuschlagstoffen mit gehärteter Oberfläche auf der Grundlage von Polystyrolschaumstoff zu schaffen, mit dem ein Leichtzuschlagstoff erhalten wird, der eine wesentlich erhöhte Dichte, bezogen auf die Dichte des Ausgangs-Polystyrolschaumstoffes, aufweist.

Ferner liegt vorliegender Erfindung die Aufgabe zugrunde, einen solchen Leichzuschlagstoff zu schaffen, der insbesondere auch zur sinnvollen Wiederverwendung von recyclisiertem Polystyrol führt.

Damit wird gemäß vorliegender Erfindung beispielsweise die sogenannte Verpackungsverordnung und das Wiederverwendungsgebot unterstützt.

In der Regel werden die Polystyrol-Partikel, beispielsweise die sogenannten EPS-Perlen durch Expandieren hergestellt und weisen in der Regel eine glatte und runde Oberfläche auf. Inbesondere an diesen glatten Polystyrol-Perlen ist die Haftung bzw. Benetzung bzw. Verbindung der Bindemittel, Füller oder Sande in Putzen erschwert.

Abgesehen von den oben genannten Vorteilen schafft die vorliegende Erfindung ferner auch einen Leichzuschlagstoff auf expandierter Polystyrol-Basis mit etwas rauherer Oberfläche, der sich dadurch auszeichnet, daß sich beispielsweise die Bindemittel und auch die anderen Inhaltsstoffe, beispielsweise der Putze, wesentlich besser mit dem Leichtzuschlagstoff verbinden. Als Bindemittel sind hier beispielsweise Zement und Kalkhydrat zu nennen.

Es hat sich gezeigt, daß insbesondere auch recyclisiertes Polystyrol (=Recycling-EPS), das beispielsweise aus gebrauchten Verpackungen stammt, sich sehr gut zu den erfindungsgemäßen Zwecken eignet, womit eine bedeutende Entlastung der Umwelt und der Mülldeponien erreicht wird.

Die oben angegebene Aufgabe wird erfindungsgemäß dadurch gelöst, daß der neue Leichtzuschlagstoff dadurch geschaffen wird, daß das expandierte Polystyrol vor der Verwendung als Leichtzuschlagstoff oder als Dämmstoff zerkleinert, insbesondere zerrieben und/oder zerbrochen und/oder zermahlen wird, worauf sich in zweiter Stufe ein Tempern im Druckschäumer anschließt. In dieser zweiten Verfahrensstufe wird unter Wasserdampfeinwirkung das Ausgangspolystyrol mit geringer Schüttdichte zu Polystyrol höherer Schüttdichte getempert, wobei man das sogenannte Temperregenerat bezüglich der gewünschten Rohdichte fachmännisch steuern kann.

Vorzugsweise beträgt die Ausgangsschüttdichte 10 g/l - 30 g/l.

Nach einer bevorzugten Ausführungsform erfolgt nach dem Zerkleinerungsvorgang ein Absieben des Feinguts mit dem Ziel, die Feinfraktion einer Körnung von 0,1 bis 0,4 mm abzusondern.

Beim Temperprozeß im Druckschäumer wird vorzugsweise die Wasserdampfeinwirkung bei einem Überdruck von 0,3 bis 5 bar, insbesondere bei 0,3 bis 1 bar durchgeführt, wobei sowohl Sattdampf, als auch mit Luft vermischter Dampf eingesetzt werden kann; dabei ist die Verwendung von Sattdampf in der Regel vorzuziehen.

Es ist ohne weiteres möglich, auch gröbere Kornfraktionen mit einem mittleren Durchmesser größer als 2 mm herzustellen, beispielsweise Kornfraktionen mit definierten Schüttdichten im Größenordnungsbereich von 2 bis 4 mm, von 4 bis 6 mm und von 6 bis 8 mm. Dabei ist es bezüglich der Produktion eines Leichtzuschlagstoffs wesentlich, eine einheitliche Schüttdichte zu besitzen, so daß die Ausgangskörnung aus EPS mit möglichst engem Kornspektrum besteht.

Gegebenenfalls kann beim Tempern eine geringfügige Anschmelzung der Oberfläche, die zur wesentlichen Vergrößerung der Härte der Partikel beiträgt, stattfinden.

Gemäß vorliegender Erfindung ist es ohne weiteres möglich, wünschenswertermaßen Schüttdichten von größer als 50 g/l zu erreichen.

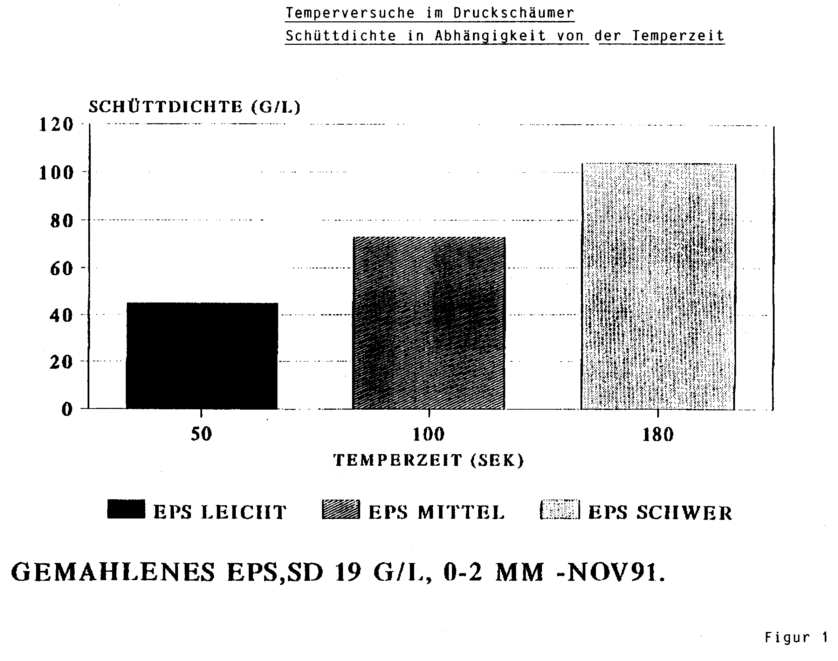

In der beiliegenden Figur 1, die das Ergebnis von Temperversuchen im Druckschäumer wiedergibt, ist die Schüttdichte in Abhängigkeit von der Temperzeit angegeben.

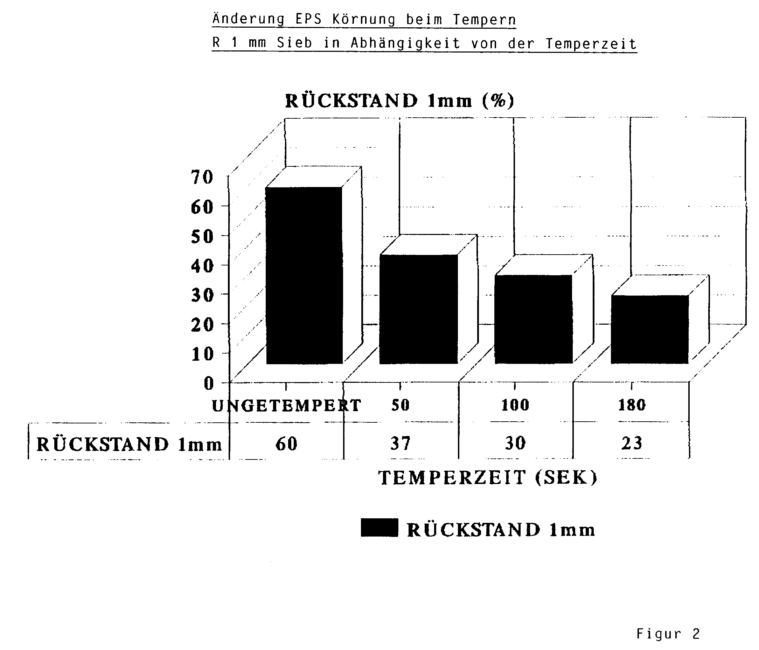

In der beiliegenden Figur 2 ist die Änderung der Körnung der Polystyrol-Partikelchen beim Tempern angegeben.

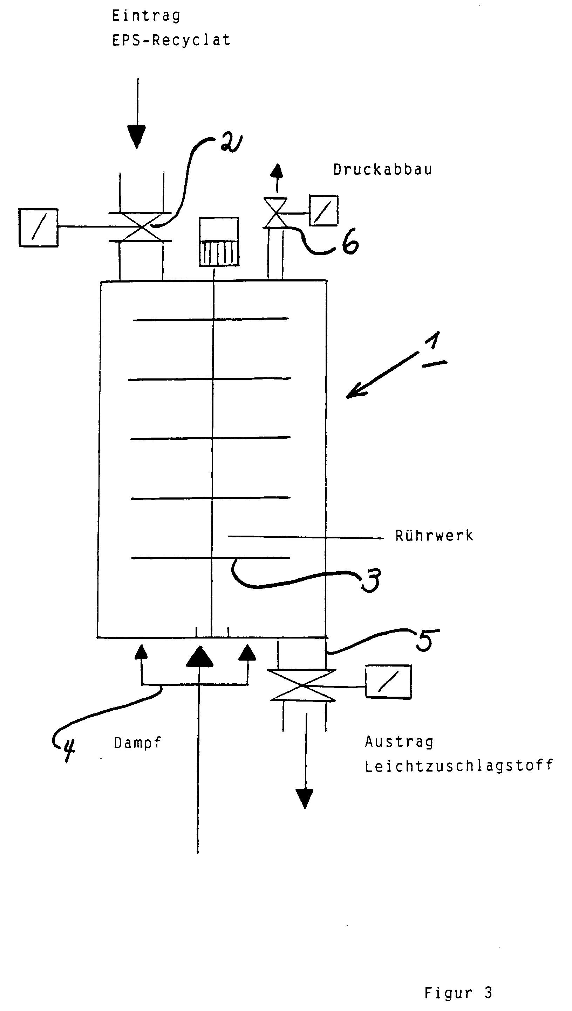

Die beiliegende Figur 3 zeigt einen erfindungsgemäß einzusetzenden Druckschäumer, der eine neuartige Eintragsvorrichtung für die zu tempernden Partikel, beispielsweise für das EPS-Recyclat aufweist.

Es folgt nun eine Beschreibung dieses Druckschäumers gemäß Figur 3:

Mit dem Bezugszeichen 1 ist die Gesamtheit des Druckschäumers bezeichnet, mit 2 ist die Eintragsvorrichtung für die Polystyrol-Partikelchen bezeichnet, mit dem Bezugszeichen 3 ist das Rührwerk, mit 4 die Dampfzufuhr, mit 5 die Austragsstelle des fertigen Leichtzuschlagstoffs und mit 6 die Ventilanordnung zum Druckabbau gekennzeichnet.

## Patentansprüche

1. Verfahren zur Herstellung von Leichtzuschlagstoff mit gehärteter Oberfläche auf der Grundlage von Polystyrolschaumstoff für Putze, Betone, mineralisch oder kunststoffgebundene Dämmplatten sowie Dämmstoffmaterial für Schüttungen, wobei das Polystyrol in erster Stufe zerkleinert wird, dadurch gekennzeichnet,
daß sich als zweite Stufe ein Tempern des zerkleinerten, insbesondere zerriebenen und/oder zerbrochenen und/oder zermahlenen Polystyrolmaterials in einem Druckschäumer anschließt.

2. Verfahren nach Anspruch 1, dadurch gekennzeichnet,
daß nach dem Zerkleinerungsvorgang ein Absieben des Feinguts, mit dem Ziel, die Feinfraktion einer Körnung von 0,1 bis 0,4 mm abzusondern, durchgeführt wird.

3. Verfahren nach Anspruch 1 oder 2, dadurch gekennzeichnet,
daß ein Ausgangsgut eingesetzt wird, dessen Schüttdichte weniger als 30 g/l beträgt.

4. Verfahren nach einem der Ansprüche 1 bis 3, dadurch gekennzeichnet,
daß beim Temperprozeß die Druckschäumer eine Wasserdampfeinwirkung bei einem Überdruck von 0,3 bis 5 bar, insbesondere bei 0,3 bis 1 bar eingehalten wird, wobei gegebenenfalls außer dem Sattdampf auch mit Luft vermischter Dampf eingesetzt wird.

5. Verfahren nach einem der Ansprüche 1 bis 4, dadurch gekennzeichnet,
daß das Aufgabematerial für den Druckschäumer (expandiertes Polystyrol) ein enges Kornspektrum aufweist, z.B. 0,4 bis 1,5 mm (Innenputze), 0,5 bis 2 mm (Außenputze), 2 bis 3 mm (Mörtel).

6. Leichtzuschlagstoff auf der Grundlage von Polystyrolschaumstoff für Putze, Betone, mineralisch oder kunststoffgebundene Dämmplatten sowie Dämmstoffmaterial für Schüttungen, der eine gehärtete Oberfläche und eine bezogen auf die Dichte des Ausgangs- Polystyrolschaumstoffes um etwa 2-fach bis zu 5-fach höhere Dichte aufweist erhältlich durch das Verfahren gemäß Anspruch 1.

7. Vorrichtung zur Durchführung eines Verfahrens nach Anspruch 1, bestehend aus einem Druckschäumer mit einer Eintragsvorrichtung für den Ausgangs-Polystyrolschaumstoff, die eine Zellenradschleuse aufweist, einem Rührwerk, einer Dampfzufuhr, einer Ventilanordnung für die Druckregulation und einer Austragsstelle für den fertigen Leichtzuschlagstoff.

## Claims

1. Procedure for the production of light aggregate with a hardened surface based on foam polystyrene for use in plasters and renderings, concrete, mineral or plastic-bound insulating boards and insulating materials as those typically used for filling, with the polystyrene being, in a first stage, comminuted, **wherein**
said first stage is followed by a second one in which the comminuted, preferably triturated and/or crushed and/or ground polystyrene material is tempered in a pressure frother.

2. The procedure according to claim 1, **wherein**
the fines are screened after the comminution process with a view to screening out the fine fraction between 0.1 and 0.4 mm of grain size.

3. The procedure according to either or both of claims 1 and 2, **wherein**
a raw material is used the bulk density of which is inferior to 30 g/l.

4. The procedure according to either or all of claims 1 to 3, **wherein**
the material, while being tempered in the pressure frother, is continuously exposed to the action of water vapour at an overpressure between 0.3 and 5 bars, preferably between 0.1 and 1 bar, and wherein steam mixed with air may be collaterally used with saturated steam.

5. The procedure according to either or all of claims 1 to 4, **wherein**
the material treated in the pressure frother (expanded polystyrene) has a close grain spectrum, e.g. between 0.4 and 1.5 mm for internal plasters, between 0.5 and 2 mm for external renderings, and between 2 and 3 mm for mortars.

6. Light aggregate based on foam polystyrene for use in plasters and renderings, concrete, mineral or plastic-bound insulating boards and insulating materials as those typically used for filling, presenting a hardened surface and a density about 2 to 5 times the one of the starting material, which is foam polystyrene before being treated in accordance with the procedure described in claim 1 hereinbefore.

7. Device for the execution of the procedure described in claim 1, defined by a pressure frother with feeding device by which the starting material - foam polystyrene - is fed into said device, consisting of a roatary-vane feeder, a stirring mechanism, a steam inlet, an arrangement of valves for pressure regulation, and a delivery unit used to discharge the treated light aggregate from the device.

## Revendications

1. Procédé de fabrication d'additifs légers à surface durcie et à base de mousse de polystyrène pour plâtres, bétons, plaques isolantes à liant minéral ou plastique ainsi que matériau isolant pour remblais où le polystyrène est broyé dans une première phase, caractérisé en ce qu'a lieu, dans une seconde étape, une mise à température du matériau en polystyrène broyé, en particulier réduit par trituration et/ou concassage et/ou pulvérisation, dans un générateur de mousse sous pression.

2. Procédé selon la revendication 1, caractérisé en ce que
le matériau fin obtenu après l'opération de réduction est tamisé dans le but de séparer les fines ayant une granulométrie de 0, 1 à 0,4 mm.

3. Procédé selon la revendication 1 ou 2, caractérisé en ce que
le produit initial utilisé présente une densité de déchargement inférieure à 30 g/l.

4. Procédé selon une des renvendications 1 à 3, caractérisé en ce que
pendant la mise à température dans les générateurs de mousse sous pression on fait agir de la vapeur d'eau avec une surpression de 0,3 à 5 bar, en particulier de 0,3 à 1 bar, et où on introduit, le cas échéant, outre de la vapeur saturée, un mélange de vapeur et d'eau.

5. Procédé selon une des renvendications 1 à 4, caractérisé en ce que
le matériau servant à alimenter le générateur de mousse sous pression (polystyrène expansé) présente une granulométrie qui se situe dans une plage étroite, par exemple 0,4 à 1,5 mm (plâtres), 0,5 à 2 mm (crépis extérieurs), 2 à 3 mm (mortiers).

6. Additif léger à base de mousse de polystyrène pour plâtres, bétons, plaques isolantes à liant minéral ou plastique ainsi que matériau isolant pour remblais, qui présente une surface durcie et une densité de 2 à 5 fois supérieure à la densité de la mousse de polystyrène initiale, qui s'obtient au moyen du procédé selon la revendication 1.

7. Installation pour la réalisation du procédé selon la revendication 1, comprenant un générateur de mousse sous pression, avec un système d'alimentation pour la mousse de polystyrène initiale, qui comprend une écluse à roue cellulaire, un agitateur, une alimentation en vapeur, un ensemble de vannes pour la régulation de la vapeur et un poste de sortie pour l'additif léger, une fois celui-ci terminé.
